Europäisches Patentamt

European Patent Office

Office européen des brevets

(11) Publication number : **0 399 656 B1**

# EUROPEAN PATENT SPECIFICATION

(45) Date of publication of patent specification :
**02.02.94 Bulletin 94/05**

(51) Int. Cl.⁵ : **A23L 1/305, C07K 5/06**

(21) Application number : **90304331.3**

(22) Date of filing : **23.04.90**

(54) **Nutrient compositions for amino acid supplementation in mammals.**

(30) Priority : **24.04.89 JP 104261/89**
**22.12.89 JP 334483/89**

(43) Date of publication of application :
**28.11.90 Bulletin 90/48**

(45) Publication of the grant of the patent :
**02.02.94 Bulletin 94/05**

(84) Designated Contracting States :
**BE DE FR GB IT SE**

(56) References cited :
**EP-A- 0 259 167**
**EP-A- 0 264 953**
**Patent abstract of Japan, vol 1, n 121(C-23), 2 September 1980**
**Patent abstract of Japan, vol 11, n 202 (C-432)(2649), 30 June 1987**

(56) References cited :
**Patent abstracts of Japan, vol 5, n 148 (C-72)(820), 10 September 1981**
**Patent abstracts of Japan, vol 11, n 381 (C-464)(2828), 12 December 1987**
**Patent abstracts of Japan, vol 7, n 285 (C-201)(1430), 20 December 1983**

(73) Proprietor : **KYOWA HAKKO KOGYO KABUSHIKI KAISHA**
**6-1, Ohtemachi Itchome**
**Chiyoda-ku Tokyo (JP)**

(72) Inventor : **Furukawa, Tadayasu**
**14325 Cypress Hill**
**Chesterfield, MO 63017 (US)**
Inventor : **Hara, Takahiro**
**3-9-9 Naka-machi**
**Machida-shi, Tokyo (JP)**

(74) Representative : **Lambert, Hugh Richmond et al**
**D. YOUNG & CO., 21 New Fetter Lane**
**London EC4A 1DA (GB)**

## Description

The present invention relates to nutrient compositions for mammals and more particularly to nutrient compositions for supplementing L-cysteine.

L-cysteine (hereinafter referred to as cysteine) is not considered to be an essential amino acid since in vivo cysteine can be synthesized from L-methionine (hereinafter referred to as methionine). Therefore, nutrient supplementation of sulphur-containing amino acids, such as cysteine, has been via the addition of methionine. In recent years, however, it has been revealed that conversion of methionine into cysteine is insufficient in newborn babies and patients with hepatic cirrhosis, homocystinemia, etc. For nutrient supplementation of sulphur-containing amino acids in those cases, therefore, it is necessary to supplement not only methionine but also cysteine [Metabolism, 37, No. 8, 796 (1988)].

It is also known that the demand for sulphur-containing amino acids increases after excessive exercise and after drinking, and to satisfy this demand the effectiveness of the administration of cysteine or L-glutathione ($\gamma$-L-glutamyl-L-cysteinyl-glycine) hereinafter referred to as glutathione, and which has a cysteine residue, has been recognized.

However, cysteine itself is unstable in solution so that it cannot be incorporated directly into liquid nutrient compositions such as infusions. N-acetyl-L-cysteine has been proposed for this purpose in place of cysteine but stability is still a problem. Glutathione is more stable than cysteine, but even so stability remains a problem in nutrient compositions, e.g. infusions which are to be sterilized by heating.

L-cystine (hereinafter referred to as cystine), which can be considered as substantially equivalent to cysteine from a nutritional point of view, is extremely stable since it is the oxidized form of cysteine, but suffers from low solubility in water (less than 0.11 g/l at 25°C) and is therefore difficult to incorporate in an infusion. Glutathione disulphide, the oxidized form of glutathione and containing a cystine residue, has been considered as a possible alternative, but so far without practical results.

As an alternative nutrient source of sulphur-containing amino acids, various peptides have been considered. For example Japanese Published Unexamined Patent Application No. 151156/87 discloses compositions comprising N,N'-bis-$\alpha$-L-aspartyl-L-cystine [hereinafter referred to as (Asp-Cys)$_2$]; DE-A-3,206,810 discloses compositions comprising $N^2$-cysteinyl-$N^6$-L-cysteinyl-L-lysine [hereinafter referred to as Cys-Lys(Cys)]; EP-A-0 264 953 discloses compositions comprising compounds represented by (X-Cys)$_2$ (wherein X is Gly, Ala, Leu, Ile or Phe); and Japanese Published Unexamined Patent Application No. 233999/88 discloses compositions comprising bis(acetylglycyl)-L,L-cystine.

Other relevant art includes Clin. Nutr., Spec. Suppl. 4, 116-123 (1985) which reports on the solubility of L-cysteinyl-bis-L-alanine [hereinafter referred to as Cys-(Ala)$_2$], and J. Nutrition 118, 1470 (1988) which reports on the behaviour of bis-$\alpha$-L-alanyl-L-cystine [hereinafter referred to as (Ala-Cys)$_2$] and bis-glycyl-L-cystine [hereinafter referred to as (Gly-Cys)$_2$] in blood.

Nevertheless a need still exists for an effective nutrient composition capable of supplementing cysteine and/or cystine, and especially liquid compositions which can be sterilized by heating.

In accordance with the present invention, it has been found that L-glutamyl-L-cystine and/or L-glutamyl-L-cysteine disulphide, hereinafter referred to respectively as Glu-Cys-Cys and (Glu-Cys)$_2$, can be used as an effective nutrient supplement to provide cysteine in vivo and moreover that liquid nutrient compositions containing such peptide supplements can be heat sterilized without any loss of effectiveness.

In accordance with the present invention and the various different aspects thereof there is or are provided:

1. The use of the peptides L-glutamyl-L-cystine and/or L-glutamyl-L-cysteine disulphide, especially the $\gamma$-type peptides, in the manufacture of nutrient compositions for the supplementation of cysteine in mammals;

2. A nutrient composition for the supplementation of cysteine in mammals comprising a heat sterilized mixture containing L-glutamyl-L-cystine and/or L-glutamyl-L-cysteine disulphide in admixture with one or more amino acids or protein hydrolysates and with an orally, parenterally or intra-intestinally administrable carrier;

3. A method of preparing a nutrient composition for the supplementation of cysteine in mammals, which comprises forming a peptide-containing mixture of L-glutamyl-L-cystine and/or L-glutamyl-L-cysteine disulphide and an orally, parenterally or intra-intestinally administrable carrier, and sterilizing the composition by heat treatment of the preformed mixture of peptide and carrier.

The peptides used in accordance with the present invention are of two types: $\alpha$ and $\gamma$. Both types can be used, but the $\gamma$ type is preferred.

$\gamma$-Glu-Cys-Cys and ($\gamma$-Glu-Cys)$_2$ are naturally occurring peptides and are efficiently utilised in vivo. In fact, it has been reported that when these compounds are independently administered subcutaneously to mice, they can be utilised in the synthesis of kidney glutathione [M.E. Anderson and A. Meister, Proc. Natl. Acad. Sci., USA, Vol.80, 707 (1983)]. In addition, it is assumed that $\gamma$-Glu-Cys-Cys and ($\gamma$-Glu-Cys)$_2$ are substrates for $\gamma$-

glu-tamyltransferase in vivo. The hydrolysis of γ-Glu-Cys-Cys and (γ-Glu-Cys)$_2$ by γ-glutamyltransferase, their in vitro hydrolysis in human and mouse plasma, and their in vivo uptake following injection, are described below in Comparative Examples 1 to 5.

Glu-Cys-Cys and (Glu-Cys)$_2$ can also both be prepared by the methods described in Methods in Enzymology, 113, 555-564 (1985).

The nutrient compositions of this invention may be in the form of solutions, pastes, powders, with other components such as other amino acids and nutrients. The Glu-Cys-Cys and (Glu-Cys)$_2$ may be used singly or together in a preferred amount of from 0.0005 to 30 wt%, based on the total weight of the composition.

Examples of nutrient compositions according to this invention are solutions of Glu-Cys-Cys and/or (Glu-Cys)$_2$ in water, physiological saline or buffer solutions; compositions containing Glu-Cys-Cys and/or (Glu-Cys)$_2$ together with amino acids or protein hydrolyzates (peptides) such as amino acid infusions; nutrient preparations for oral nutrient supplementation; and jelly-like nutrient preparations.

In the case of oral or intra-intestinal administration, nutrient additives such as readily digestible carbohydrates, fats, vitamins and minerals may be added to the compositions to adjust the nutrient balance. Specific examples of the nutrient additives include starch, dextrin, glucose, maltose, lactose, skimmed milk, egg yolk powder, egg yolk oil, malt extract, medium chain fatty acid, vitamin A, thiamine, riboflavin, pyridoxine, niacin, pantothenic acid, cyanocobalamin, L-ascorbic acid, α-tocopherol, sodium chloride, potassium chloride, calcium chloride, and iron lactate. Pseudo-tasting agents, sweeteners, flavours and dyes, flavouring agents, and appearance-improving agents may also be added as may be necessary to improve the flavour of the compositions for oral administration.

In preparing nutrient compositions according to the invention, the various components can be mixed with water to form a liquid or paste which can then be sealed in a moisture-proof bag, bottle of can, and then sterilized by heating prior to storage and subsequent distribution. Alternatively, the components can be mixed as a dry powder and the powder then mixed with water just before use. Nutrient compositions according to the invention containing Glu-Cys-Cys and/or (Glu-Cys)$_2$ can be subjected to heat treatments such as cooking or sterilization without problem since both peptides are highly stable to heat and stable in solution over long periods of time.

The preferred compositions of this invention are amino acid infusions comprising Glu-Cys-Cys and/or (Glu-Cys)$_2$ and containing the following:

| Amino-acid or peptide | Concentration (mg/dl) | | |
|---|---|---|---|
| L-isoleucine | 160 | - | 1070 |
| L-leucine | 180 | - | 1720 |
| L-lysine hydrochloride | 180 | - | 2400 |
| L-phenylalanine | 130 | - | 1400 |
| L-methionine | 50 | - | 1200 |
| L-threonine | 80 | - | 720 |
| L-tryptophan | 30 | - | 350 |
| L-valine | 70 | - | 1130 |
| L-arginine hydrochloride | 120 | - | 1500 |
| L-histidine hydrochloride | 50 | - | 900 |
| Glycine | 200 | - | 2500 |
| L-alanine | 70 | - | 1130 |
| Sodium L-aspartate | 0 | - | 1300 |
| Sodium L-glutamate | 0 | - | 1300 |
| Glu-Cys-Cys and/or (Glu-Cys)$_2$ | 1 | - | 7000 |
| L-proline | 90 | - | 1080 |
| L-serine | 60 | - | 1200 |
| L-tyrosine | 3 | - | 90 |

Such amino acid infusions can be obtained by conventional methods for preparing amino acid infusions, for example, according to the method described in Example 1 below.

Glu-Cys-Cys and (Glu-Cys)$_2$ both have extremely high solubility compared with cystine, as shown in Table 1 below, and are extremely stable during storage over long periods of time even after heat sterilisation. For example the peptides show hardly any decomposition at a concentration of 10 mM at pH 6.5 after heat treatment at 110°C for 20 minutes. Also, the peptides remain entirely stable in solutions at a concentration of 10 mM at pH 6.5 for 60 days at 40°C.

<u>Table 1</u>

| | Solubility in 1000 ml of water (g) |
|---|---|
| γ-Glu-Cys-Cys | > 70 |
| (γ-Glu-Cys)$_2$ | > 70 |
| Cys-Lys(Cys) | > 50 |
| (Asp-Cys)$_2$ | > 50 |
| (Gly-Cys)$_2$ | > 50 |
| (Ala-Cys)$_2$ | > 50 |
| Cys-(Ala)$_2$ | 8.1 |
| Cystine | 0.1 |

(pH 6.5, 25°C)

Comparative Example 1

The hydrolysis of γ-Glu-Cys-Cys and (γ-Glu-Cys)$_2$ by γ-glutamyltransferase is compared with that of (Asp-Cys)$_2$, (Gly-Cys)$_2$ and (Ala-Cys)$_2$, by dissolving each peptide in tris-hydrochloride buffer solution (pH 7) at a concentration of 5 mM and adding γ-glutamyltransferase prepared from swine kidney to each solution. After reaction at 37°C for 120 minutes, the amount of the remaining peptide was determined. The results are given in Table 2.

<u>Table 2</u>

| | Degree of hydrolysis |
|---|---|
| γ-Glu-Cys-Cys | substantially complete |
| (γ-Glu-Cys)$_2$ | substantially complete |
| (Asp-Cys)$_2$ | substantially nil |
| (Gly-Cys)$_2$ | substantially nil |
| (Ala-Cys)$_2$ | substantially nil |

Comparative Example 2

The <u>in</u> <u>vitro</u> hydrolysis of γ-Glu-Cys-Cys and (γ-Glu-Cys)$_2$ in human plasma is compared with that of known cystine-containing peptides shown in Table 3 by adding 10 μl of a 24 mM solution of the peptide in physiological saline to 100 μl human plasma. After reaction at 37°C for 30 minutes, the amount of the remaining peptide is determined. As shown in Table 3, the former two compounds show only little hydrolysis in contrast to the latter three.

### Table 3

| | Residual amount in plasma (% of original) |
|---|---|
| $\gamma$-Glu-Cys-Cys | 67 |
| $(\gamma$-Glu-Cys$)_2$ | 85 |
| $(Asp-Cys)_2$ | 30 |
| $(Gly-Cys)_2$ | 35 |
| $(Ala-Cys)_2$ | 26 |

Comparative Example 3

The in vitro hydrolysis of $\gamma$-Glu-Cys-Cys and $(\gamma$-Glu-Cys$)_2$ in mouse plasma is compared with that of (Ala-Cys$)_2$ by adding 5 $\mu$l of a 27.1 mM solution of the peptide in physiological saline to 50 $\mu$l of plasma collected and prepared from C3H/He mice (6 weeks of age, male, weighing 22 g), followed by reaction at 37°C for 30 minutes. Five mice were used for each test group, and the results are expressed as the mean value of the five mice.

### Table 4

| | Residual amount in plasma (% of original) |
|---|---|
| $\gamma$-Glu-Cys-Cys | 53 |
| $(\gamma$-Glu-Cys$)_2$ | 84 |
| $(Ala-Cys)_2$ | 0 |

Comparative Example 4

The disappearance rate of $\gamma$-Glu-Cys-Cys and $(\gamma$-Glu-Cys$)_2$ from mouse blood is compared with that of (Ala-Cys$)_2$ by injecting physiological saline solutions of $\gamma$-Glu-Cys-Cys, $(\gamma$-Glu-Cys$)_2$ and (Ala-Cys$)_2$ into the tail vein of groups of C3H/He mice (6 weeks of age, male, weighing 22 g) at a dose of 250 $\mu$moles/kg body weight, followed by the collection of blood samples over a period of 30 minutes. The change in concentration of the peptides and their constituent amino acids in the blood with the passage of time were determined. Five mice were used for each test grup, and the results are shown by the mean $\pm$ SEM in Table 5.

## Table 5

Unit: µM

| | Time after injection of peptide | | | | | | |
|---|---|---|---|---|---|---|---|
| | 0 min | 1 min | 2 min | 5 min | 10 min | 20 min | 30 min |
| Concentration in blood | | | | | | | |
| GCC | 0 | 217.8 ± 19.7 | 190.0 ± 9.3 | 88.7 ± 6.7 | 50.5 ± 5.7 | 10.5 ± 3.7 | 2.8 ± 1.8 |
| Glu | 64.5 ± 1.7 | 86.2 ± 2.7 | 94.0 ± 7.6 | 97.2 ± 4.1 | 110.4 ± 5.7 | 93.4 ± 7.4 | 86.9 ± 6.2 |
| CysCys | 6.84 ± 1.6 | 37.8 ± 2.3 | 39.0 ± 2.0 | 58.5 ± 2.9 | 56.9 ± 5.3 | 34.0 ± 1.0 | 24.3 ± 1.6 |
| GCCG | 0 | 376.7 ± 30.1 | 249.9 ± 22.5 | 90.6 ± 9.9 | 32.3 ± 2.1 | 5.3 ± 0.5 | 0 |
| GCC | 0 | 26.8 ± 1.8 | 31.5 ± 2.4 | 46.4 ± 2.1 | 46.0 ± 2.3 | 21.1 ± 1.2 | 9.0 ± 0.4 |
| Glu | 64.5 ± 1.7 | 118.8 ± 1.3 | 121.8 ± 10.1 | 99.0 ± 6.1 | 104.5 ± 1.1 | 87.5 ± 4.9 | 90.7 ± 8.6 |
| CysCys | 6.84 ± 1.6 | 10.5 ± 0.3 | 13.1 ± 2.3 | 23.1 ± 0.9 | 27.9 ± 1.3 | 30.1 ± 1.2 | 23.6 ± 0.6 |
| ACCA | 0 | 70.1 ± 5.7 | 24.9 ± 10.8 | 0 | 0 | 0 | 0 |
| ACC | 0 | 18.0 ± 1.4 | 5.7 ± 2.3 | 0 | 0 | 0 | 0 |
| Ala | 241.6 ± 19.7 | 615.9 ± 31.4 | 471.1 ± 11.9 | 387.6 ± 5.8 | 267.1 ± 9.3 | 240.3 ± 11.6 | 220.4 ± 0.1 |
| CysCys | 6.84 ± 1.6 | 42.6 ± 3.1 | 43.4 ± 7.1 | 44.8 ± 4.0 | 35.1 ± 1.2 | 19.6 ± 1.5 | 18.4 ± 1.5 |

| | |
|---|---|
| GCC: | γ-Glu-Cys-Cys |
| GCCG: | (γ-Glu-Cys)$_2$ |
| ACCA: | (Ala-Cys)$_2$ |
| ACC | Ala-(Cys)$_2$ |

As will be seen, (Ala-Cys)$_2$ disappeared from the blood extremely rapidly after administration with simultaneous rapid release of alanine. In the groups which received γ-Glu-Cys-Cys and (γ-Glu-Cys)$_2$ respectively, the decrease in the amount of the peptide and the corresponding increse in amount of glutamic acid in the blood were moderate.

Comparative Example 5

The uptake of γ-Glu-Cys-Cys and (γ-Glu-Cys)$_2$ by mice kidneys is compared with that of (Ala-Cys)$_2$ by administering physiological saline solutions of γ-Glu-Cys-Cys, (γ-Glu-Cys)$_2$ and (Ala-Cys)$_2$ through the tail vein to groups of C3H/He mice (6 weeks of age, male, weighing 22 g) at a dose of 250 µmoles/kg body weight, following which the kidneys were excised 1, 5 and 20 minutes after administration of the peptide. The content of glutamic acid, alanine and cystine in the excised kidneys were then determined. Five mice were used for each test group. The results are shown by the mean ± SEM in Table 6.

Table 6

Unit: μmole/g wet weight of kidney

|  | Time after injection of peptide | | | |
|  | 0 min | 1 min | 5 min | 20 min |
| --- | --- | --- | --- | --- |
| Glu | 5.54 | 13.09 | 20.32 | 15.1 |
| (GCC) | ± 0.33 | ± 0.23 | ± 1.18 | ± 1.23 |
| Glu | 5.54 | 14.82 | 22.5 | 18.14 |
| (GCCG) | ± 0.3 | ± 0.75 | ± 1.00 | ± 3.37 |
| Ala | 2.33 | 2.87 | 2.59 | 2.16 |
| (ACCA) | ± 0.11 | ± 0.18 | ± 0.28 | ± 0.31 |

In the groups which received γ-Glu-Cys-Cys and (γ-Glu-Cys)$_2$ respectively, the concentration of glutamic acid was significantly high, and this suggests uptake of the peptides by the kidney and effective utilization thereof. On the other hand, cystine was not detected in the kidney for any of the peptides tested.

From the above comparative examples, it is to be seen that γ-Glu-Cys-Cys and (γ-Glu-Cys)$_2$ are hardly hydrolyzed in plasma in comparison with other cystine-containing peptides, but are specifically hydrolyzed by γ-glutamyltransferase which is widely distributed in the vital tissues of the kidney, small intestine, liver, etc. Thus, when γ-Glu-Cys-Cys and/or (γ-Glu-Cys)$_2$ are administered intravenously they can be metabolised by the kidney, liver, etc. with little hydrolysis in the blood stream, in contrast to known cystine-containing peptides. Alternatively, when γ-Glu-Cys-Cys and/or (γ-Glu-Cys)$_2$ are administered orally or intra-intestinally, they are hydrolyzed by γ-glutamyltransferase in the small intestine and effectively utilized through that route. Moreover, it is considered possible that γ-Glu-Cys-Cys and (γ-Glu-Cys)$_2$ may also be taken into the cells as they are without prior hydrolysis.

The results obtained in Comparative Examples 4 and 5 are illustratred in the accompanying drawings, in which:

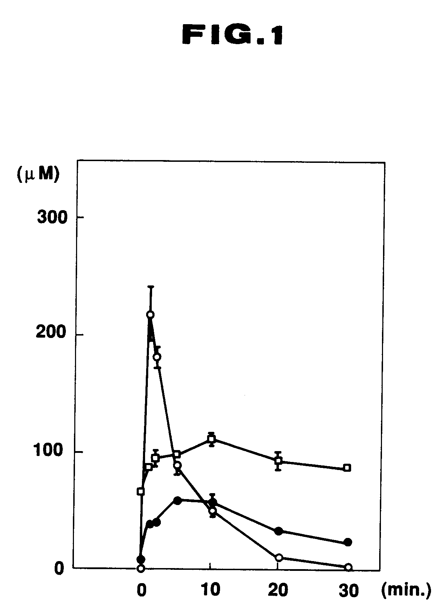

Figure 1 shows changes in the concentrations of γ-Glu-Cys-Cys and its constituent amino acids in blood with the passage of time after injection of γ-Glu-Cys-Cys to mice. The symbols o-o, □-□ and ●-● refer to γ-Glu-Cys-Cys, glutamic acid and cystine, respectively.

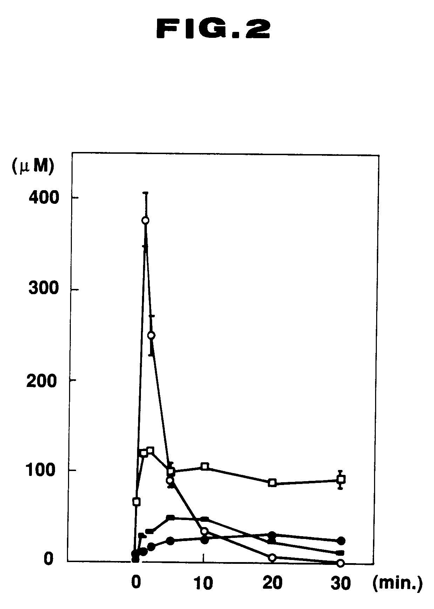

Figure 2 shows changes in the concentrations of (γ-Glu-Cys)$_2$, γ-Glu-Cys-Cys and its constituent amino acids in blood with the passage of time after injection of (γ-Glu-Cys)$_2$ to mice. The symbols o-o, ■-■, □-□, and ●-● refer to (γ-Glu-Cys)$_2$, γ-Glu-Cys-Cys, glutamic acid and cystine, respectively.

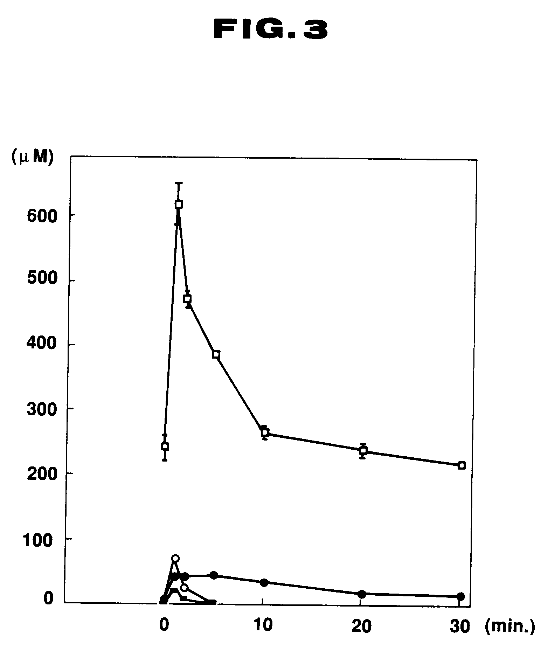

Figure 3 shows changes in the concentrations of (Ala-Cys)$_2$, alanyl-cystine [hereinafter referred to as Ala-(Cys)$_2$] and its constituent amino acids in blood with the passage of time after injection of (Ala-Cys)$_2$ to mice. The symbols o-o, ■-■, □-□, and ●-● refer to (Ala-Cys)$_2$, Ala-(Cys)$_2$, alanine and cystine, respectively.

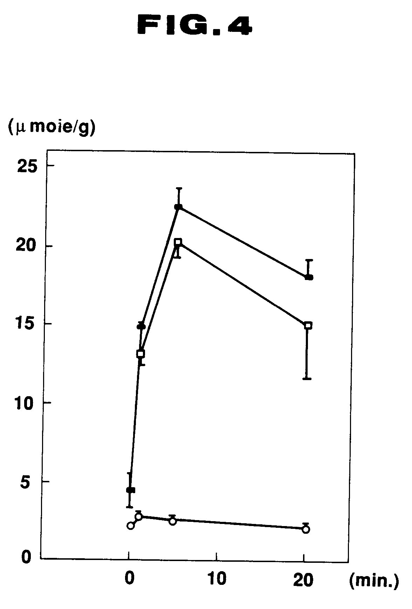

Figure 4 shows changes in the concentrations of glutamic acid and alanine in kidney with the passage of time after injection of γ-Glu-Cys-Cys, (γ-Glu-Cys)$_2$ and (Ala-Cys)$_2$ to mice. The symbols □-□, ■-■, and o-o refer to glutamic acid derived from γ-Glu-Cys-Cys, glutamic acid derived from (γ-Glu-Cys)$_2$ and alanine derived from (Ala-Cys)$_2$, respectively.

The preparation of nutrient compositions according to the invention is illustrated in the following representative examples.

Example 1, Sterile Amino Acid Nutrient Infusion

To the amino acid composition described below was added 1 liter of distilled water at about 70°C to dissolve the components. The pH was adjusted to 6.5 with NaOH solution. The solution was filtered through a Millipore filter and the filtrate was packed in glass bottles in 200 ml portions, followed by blowing with sterile nitrogen gas for 30 seconds. After sealing, the bottles were sterilized by heating at 110°C for 60 minutes.

| L-isoleucine | 4.6 g |
| L-leucine | 7.7 g |
| L-lysine hydrochloride | 5.0 g |
| L-phenylalanine | 4.3 g |
| L-methionine | 2.1 g |
| L-threonine | 2.9 g |

| | |
|---|---|
| L-tryptophan | 1.0 g |
| L-valine | 4.9 g |
| L-arginine hydrochloride | 6.1 g |
| L-histidine hydrochloride | 2.6 g |
| Glycine | 3.4 g |
| L-alanine | 4.6 g |
| Sodium L-aspartate | 0.3 g |
| Sodium L-glutamate | 0.3 g |
| $\gamma$-Glu-Cys-Cys | 3.0 g |
| L-proline | 3.9 g |
| L-serine | 2.3 g |
| L-tyrosine | 0.3 g |

### Example 2, Sterile Amino Acid Nutrient Infusion

To the amino acid composition described below was added 1 liter of distilled water at about 70°C to dissolve the components. The pH was adjusted to 6.5 with NaOH solution. The solution was filtered through a millipore filter and the filtrate was packed in glass bottles in 200 ml portions, followed by blowing with sterile nitrogen gas for 30 seconds. After sealing, the bottles were sterilized by heating at 110°C for 60 minutes.

| | |
|---|---|
| L-isoleucine | 5.6 g |
| L-leucine | 12.5 g |
| L-lysine hydrochloride | 11.0 g |
| L-phenylalanine | 9.5 g |
| L-methionine | 3.7 g |
| L-threonine | 6.5 g |
| L-tryptophan | 1.0 g |
| L-valine | 4.9 g |
| L-arginine hydrochloride | 9.5 g |
| L-histidine hydrochloride | 8.0 g |
| Glycine | 10.4 g |
| L-alanine | 6.5 g |
| Sodium L-aspartate | 3.8 g |
| Sodium L-glutamate | 2.5 g |
| $(\gamma$-Glu-Cys$)_2$ | 3.0 g |
| L-proline | 3.9 g |
| L-serine | 2.3 g |
| L-tyrosine | 0.3 g |

### Example 3, Sterile Amino Acid Nutrient Jelly

The following components were mixed to form a mixture:

| | |
|---|---|
| Casein hydrolyzate | 10 g |
| Gelatine | 8 g |
| $\gamma$-Glu-Cys-Cys | 2.5 g |
| Dextrin | 20 g |
| Reduced maltose | 20 g |
| Water | 300 ml |

The mixture was heated at 100°C for 30 minutes and dispersed. The resultant dispersion was cooled to give a jelly-like nutrient preparation. The $\gamma$-Glu-Cys-Cys component remained stable throughout the process.

## Claims

1. The use of the peptides L-glutamyl-L-cystine and/or L-glutamyl-L-cysteine disulphide in the manufacture of nutrient compositions for the supplementation of cysteine in mammals.

2. A use of the peptides L-glutamyl-L-cystine and/or L-glutamyl-L-cysteine disulphide according to claim 1, wherein the said peptide(s) is or are the $\gamma$-type.

3. A nutrient composition for the supplementation of cysteine in mammals comprising a heat sterilized mixture containing L-glutamyl-L-cystine and/or L-glutamyl-L-cysteine disulphide in admixture with one or more amino acids or protein hydrolysates and with an orally, parenterally or intra-intestinally administrable carrier.

4. A nutrient composition according to claim 3, wherein said composition contains L-glutamyl-L-cystine and/or L-glutamyl-L-cysteine disulphide in an amount of from 0.0005 to 30 wt% based on the total composition.

5. A nutrient composition according to claim 3 or 4, which comprises said L-glutamyl-L-cystine and/or L-glutamyl-L-cysteine disulphide in admixture in an amino acid infusion.

6. A nutrient composition according to claim 5, which has the following composition:

|  | (mg/dl) |
| --- | --- |
| L-isoleucine | 160 – 1070 |
| L-leucine | 180 – 1720 |
| L-lysine hydrochloride | 180 – 2400 |
| L-phenylalanine | 130 – 1400 |
| L-methionine | 50 – 1200 |
| L-threonine | 80 – 720 |
| L-tryptophan | 30 – 350 |
| L-valine | 70 – 1130 |
| L-arginine hydrochloride | 120 – 1500 |
| L-histidine hydrochloride | 50 – 900 |
| Glycine | 200 – 2500 |
| L-alanine | 70 – 1130 |
| Sodium L-aspartate | 0 – 1300 |
| Sodium L-glutamate | 0 – 1300 |
| L-glutamyl-L-cystine and/or L-glutamyl-L-cysteine disulphide | 1 – 7000 |
| L-proline | 90 – 1080 |
| L-serine | 60 – 1200 |
| L-tyrosine | 3 – 90 |

7. A nutrient composition according any one of claims 3 to 6, wherein the L-glutamyl-L-cystine and/or L-glutamyl-L-cysteine disulphide is or are of the γ-type.

8. A method of preparing a nutrient composition for the supplementation of cysteine in mammals, which comprises forming a peptide-containing mixture of L-glutamyl-L-cystine and/or L-glutamyl-L-cysteine disulphide and an orally, parenterally or intra-intestinally administrable carrier, and sterilizing the composition by heat treatment of the preformed mixture of peptide and carrier.

9. A method according to claim 8, as applied to the manufacture of a heat sterilized peptide containing nutrient composition as claimed in any one of claims 3-7.

**Patentansprüche**

1. Verwendung der Peptide L-Glutamyl-L-cystin und/oder L-Glutamyl-L-cysteindisulfid zur Herstellung von Nährstoffzusammensetzungen für die Anreicherung von Cystein in Säugern.

2. Verwendung der Peptide L-Glutamyl-L-cystin und/oder L-Glutamyl-L-cysteindisulfid nach Anspruch 1, wobei das (die) Peptid(e) vom γ-Typ ist (sind).

3. Nährstoffzusammensetzung für die Anreicherung von Cystein in Säugern, umfassend ein hitzesterilisiertes Gemisch, das L-Glutamyl-L-cystin und/oder L-Glutamyl-L-cysteindisulfid im Gemisch mit einer oder mehreren Aminosäuren oder Proteinhydrolysaten und mit einem oral, parenteral oder intratestinal verabreichbaren Träger enthält.

4. Nährstoffzusammensetzung nach Anspruch 3, wobei die Zusammensetzung L-Glutamyl-L-cystin und/oder L-Glutamyl-L-cysteindisulfid in einer Menge von 0,0005 bis 30 Gew.-%, bezogen auf die Gesamtzusammensetzung, enthält.

5. Nährstoffzusammensetzung nach Anspruch 3 oder 4, umfassend das L-Glutamyl-L-cystin und/oder L-Glutamyl-L-cysteindisulfid im Gemisch in einer Aminosäureinfusion.

6. Nährstoffzusammensetzung nach Anspruch 5 mit der folgenden Zusammensetzung:

|  | (mg/dl) |
|---|---|
| L-Isoleucin | 160 – 1070 |
| L-Leucin | 180 – 1720 |
| L-Lysinhydrochlorid | 180 – 2400 |
| L-Phenylalanin | 130 – 1400 |
| L-Methionin | 50 – 1200 |
| L-Threonin | 80 – 720 |
| L-Tryptophan | 30 – 350 |
| L-Valin | 70 – 1130 |
| L-Argininhydrochlorid | 120 – 1500 |
| L-Histidinhydrochlorid | 50 – 900 |
| Glycin | 200 – 2500 |
| L-Alanin | 70 – 1130 |
| Natrium-L-aspartat | 0 – 1300 |
| Natrium-L-glutamat | 0 – 1300 |
| L-Glutamyl-L-cystein und/oder L-Glutamyl-L-cysteindisulfid | 1 – 7000 |
| L-Prolin | 90 – 1080 |
| L-Serin | 60 – 1200 |
| L-Tyrosin | 3 – 90. |

7. Nährstoffzusammensetzung nach einem der Ansprüche 3 bis 6, wobei das L-Glutamyl-L-cystin und/oder L-Glutamyl-L-cysteindisulfid vom γ-Typ ist (sind).

8. Verfahren zur Herstellung einer Nährstoffzusammensetzung für die Anreicherung von Cystein in Säugern, umfassend die Erzeugung eines peptidhaltigen Gemischs von L-Glutamyl-L-cystin und/oder L-Glutamyl-L-Cysteindisulfid und eines oral, parenteral und/oder intratestinal verabreichbaren Trägers, und Sterilisation der Zusammensetzung durch Hitzebehandlung des vorgeformten Gemischs aus Peptid und Träger.

9. Verfahren nach Anspruch 8, angewendet zur Herstellung einer ein hitzesterilisiertes Peptid enthaltenden Nährstoffzusammensetzung gemäß einem der Ansprüche 3 bis 7.

**Revendications**

1. Emploi des peptides L-glutamyl-L-cystine et/ou disulfure de L-glutamyl-L-cystéine, dans la fabrication de compositions nutritives pour apport de cystéine à des mammifères.

2. Emploi des peptides L-glutamyl-L-cystine et/ou disulfure de L-glutamyl-L-cystéine, conforme à la revendication 1, ces peptides étant de type γ.

3. Composition nutritive pour apport de cystéine à des mammifères, constituée d'un mélange, stérilisé par chauffage, contenant de la L-glutamyl-L-cystine et/ou du disulfure de L-glutamyl-L-cystéine, mélangés avec un ou plusieurs acides aminés ou hydrolysats de protéines et avec un véhicule pour administration par voie orale, parentérale ou intra-intestinale.

4. Composition nutritive conforme à la revendication 3, qui contient de la L-glutamyl-L-cystine et/ou du disulfure de L-glutamyl-L-cystéine en une proportion de 0,0005 à 30 % en poids par rapport à la composition totale.

5. Composition nutritive conforme à la revendication 3 ou 4, qui comprend de la L-glutamyl-L-cystine et/ou du disulfure de L-glutamyl-L-cystéine, mélangés dans une solution d'acides aminés à perfuser.

6. Composition nutritive conforme à la revendication 5, présentant la composition suivante :

|  | (mg/dl) |
| --- | --- |
| L-isoleucine | 160 - 1070 |
| L-leucine | 180 - 1720 |
| L-lysine, chlorhydrate | 180 - 2400 |
| L-phénylalanine | 130 - 1400 |
| L-méthionine | 50 - 1200 |
| L-thréonine | 80 - 720 |
| L-tryptophane | 30 - 350 |
| L-valine | 70 - 1130 |

```
L-arginine, chlorhydrate              120 -  1500
L-histidine, chlorhydrate              50 -   900
glycine                               200 -  2500
L-alanine                              70 -  1130
L-aspartate de sodium                   0 -  1300
L-glutamate de sodium                   0 -  1300
L-glutamyl-L-cystine et/ou
disulfure de L-glutamyl-L-cystéine      1 -  7000
L-proline                              90 -  1080
L-sérine                               60 -  1200
L-tyrosine                              3 -    90
```

**7.** Composition nutritive conforme à l'une quelconque des revendications 3 à 6, dans laquelle la L-glutamyl-L-cystine et/ou le disulfure de L-glutamyl-L-cystéine sont du type γ.

**8.** Procédé de préparation d'une composition nutritive pour apport de cystéine à des mammifères, qui comporte le fait de préparer un mélange contenant des peptides, de la L-glutamyl-L-cystine et/ou du disulfure de L-glutamyl-L-cystéine, et un véhicule pour administration par voie orale, parentérale ou intra-intestinale, et le fait de stériliser cette composition en chauffant le mélange préparé de peptides et de véhicule.

**9.** Procédé conforme à la revendication 8, appliqué à la fabrication d'une composition nutritive contenant des peptides et stérilisée par chauffage, conforme à l'une quelconque des revendications 3 à 7.

# FIG.1

# FIG.2

# FIG.3

# FIG.4